# EUROPEAN PATENT APPLICATION

(11) **EP 1 494 163 A2**
(43) Date of publication of application: **05.01.2005**
(21) Application number: 04015219.1
(22) Date of filing: 29.06.2004
(51) Int. Cl.: G06K 9/00

(54) **Fingerprint input device and personal authentication system**

(30) Priority: 30.06.2003 JP 2003187444
(71) Applicant: CANON KABUSHIKI KAISHA, Ohta-ku, Tokyo (JP)
(72) Inventor: Hata, Fumio, 3-30-2, Shimomaruko, Ohta-ku Tokyo (JP)
(74) Representative: Leson, Thomas Johannes Alois, Dipl.-Ing.

(57) **Abstract**

The present invention provides a fingerprint input device that is small in size and consumes less power. The fingerprint input device (101) includes: a light source unit (2) that emits light (2a) into an inside of a sliding finger (10); and an image pickup unit (1a) that includes a light-receiving area (3a) smaller than an area of a fingerprint image to be read and receives light (2b) scattered from the inside of the finger to a fingerprint surface (10a) in the light-receiving area. The light source unit is arranged on a sliding path of the finger in the vicinity of the image pickup unit so as to irradiate with light the finger, the fingerprint surface of which is in contact with the light-receiving area of the image pickup unit.

## Description

### BACKGROUND OF THE INVENTION

### Field of the Invention

The present invention relates to a device for inputting a fingerprint image of a picked-up fingerprint, and more particularly to a fingerprint input device preferably mounted on a small-sized device such as a cellular phone.

### Related Background Art

In recent years, in accordance with spread of economic activities such as electronic commerce through remarkable progress in the information technology, there have been increasing needs for electronifying personal authentication for the purpose of preventing illegal use of information. As means for electronifying personal authentication, a method of inputting a fingerprint image has been often used for many years. For example, JP 2000-217803 A discloses a method of irradiating a near-infrared ray to the inside of a finger, causing a user to bring the finger into contact with the vicinity of a surface of a two-dimensional image pickup element, and receiving scattered light from the inside of the finger. With this method, a fingerprint input device, which does not require a total reflection prism or the like and is small in size, can be constituted.

However, in order to input a fingerprint image covering the entire fingerprint as in the above-mentioned technique, a dimension of about 10 to 20 square millimeters is usually required of an image pickup unit. For example, for the purpose of mounting the fingerprint input device on a portable device or the like, further miniaturization of the fingerprint input device is required. In addition, for this purpose, it is also important to minimize power consumption.

### SUMMARY OF THE INVENTION

The present invention has been made in order to meet such a demand, and therefore has an object to provide a fingerprint input device that is smaller in size and consumes less power.

A fingerprint input device in accordance with the present invention is characterized by including: a light source unit that emits light into an inside of a finger; and an image pickup unit that includes a light-receiving area smaller than an area of a fingerprint image to be read and receives rays, which are scattered from the inside of the finger to a fingerprint surface, in the light-receiving area, and in the fingerprint input device, the light source unit is arranged so as to irradiate light on the finger, the fingerprint surface of which is in contact with the light-receiving area of the image pickup unit.

A personal authentication device in accordance with the present invention is characterized by including the fingerprint input device of the present invention and performing personal authentication using a fingerprint image to be inputted from the fingerprint input device.

According to the fingerprint input device in accordance with the present invention, a user is caused to bring a fingerprint surface of his/her finger to a light-receiving area, which is smaller than an area of a fingerprint image to be read, and light is emitted into a sliding finger. Thus, the fingerprint image can be read satisfactorily with a relatively small image pickup unit and a small number of light source units. Consequently, a small and inexpensive fingerprint input device can be constituted. In addition, control of power consumption can be realized through miniaturization of the device.

Further, according to the personal authentication system in accordance with the present invention, personal authentication is performed using the fingerprint input device. Thus, miniaturization of a system and reduction in power consumption can be realized.

### BRIEF DESCRIPTION OF THE DRAWINGS

FIG. 1 is a perspective view of a fingerprint input device according to a first embodiment of the present invention;
FIGS. 2A and 2B are sectional views of the fingerprint input device according to the first embodiment;
FIG. 3 is a perspective view of a fingerprint input device according to a second embodiment of the present invention;
FIG. 4 is a sectional view of the fingerprint input device according to the second embodiment of the present invention;
FIGS. 5A and 5B are perspective views of a fingerprint input device according to a third embodiment of the present invention;
FIGS. 6A and 6B are sectional views of the fingerprint input device according to the third embodiment of the present invention;
FIG. 7 is an explanatory view for explaining an example of application of the first embodiment of the present invention;
FIG. 8 is an explanatory view for explaining an example of application of the second embodiment of the present invention; and
FIG. 9 is a block diagram showing a personal authentication system according to an embodiment of the present invention.

### DESCRIPTION OF THE PREFERRED EMBODIMENTS

Embodiments of the present invention will be hereinafter explained in detail with reference to the accompanying drawings.

### First embodiment

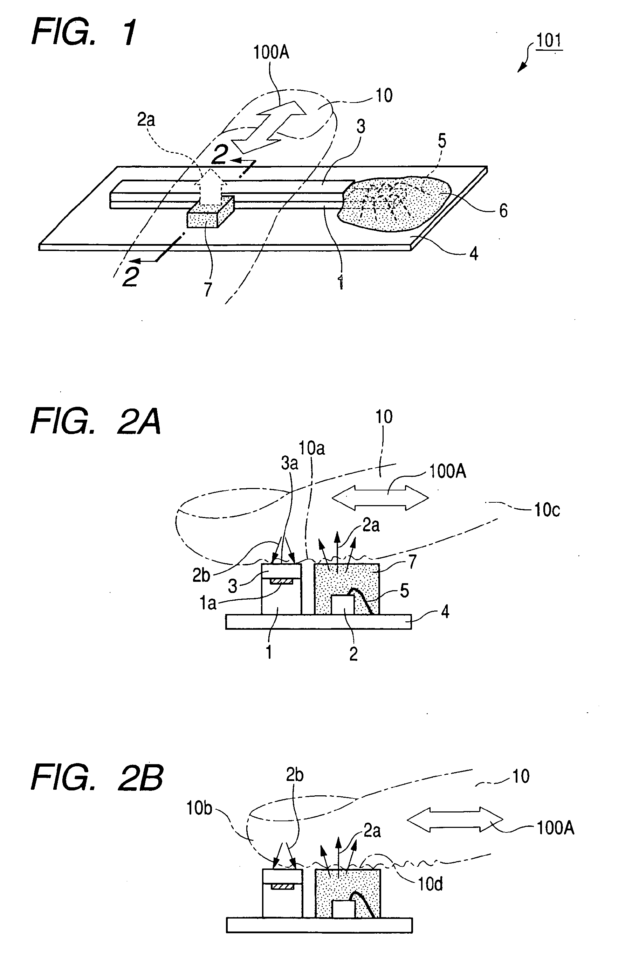

FIG. 1 is a perspective view of a fingerprint input device according to a first embodiment of the present invention. FIGS. 2A and 2B are sectional views along a line 2-2 of FIG. 1. In a fingerprint input device 101, reference numeral 1 denotes a silicon chip, and 1a denotes an image pickup unit formed on the silicon chip 1, in which solid-state image pickup elements such as CCDs or CMOSs are arranged one-dimensionally or two-dimensionally. In general, it is said that resolution of 500 dpi (the number of dots to be resolved per inch) is required for inputting a fingerprint image. An arrangement pitch for the solid-state image pickup elements forming the image pickup unit 1a is generally 50 micrometers or less. In addition, a plane dimension of the image pickup unit 1a is set to a minimum dimension necessary for sequentially reading fingerprints of a finger sliding on the image pickup unit 1a. For example, the image pickup unit 1a can be designed to have a rectangular shape with the long sides of 10 to 20 millimeters and the short sides of several millimeters or less.

Reference numeral 2 denotes a light source unit, which is more specifically an LED chip consisting mainly of a compound semiconductor.

Reference numeral 3 denotes an optical cover that protects the image pickup unit 1a from contacting with a finger or the like and transmits diffuse light 2a, which is described later, for obtaining a fingerprint image to the image pickup unit 1a. A fiber optics plate (FOP) or other translucent members can be used for the optical cover 3. This optical cover 3 is adhered and fixed over the silicon chip 1 on which the image pickup unit 1a is formed.

The silicon chip 1 and the LED chip 2 are adhered and fixed on a common wiring board 4. Electrodes of the silicon chip 1 and electrodes of the LED chip 2 are connected to electrodes of the wiring board 4 (the electrodes are not shown in the figures) via a metal wire 5 according to a known wire bonding technique. The metal wire 5 is fragile and may be broken when a finger or the like comes into direct contact with the same. Therefore, the silicon chip 1 and the LED chip 2 are protected by sealing resin 6 and sealing resin 7, respectively.

For the purpose of constituting the device in a small size, a light-receiving surface 3a of the image pickup unit 1a, that is, an upper surface of the optical cover 3 is formed with an area not covering an entire fingerprint 10a of a finger 10. In addition, a longitudinal dimension thereof is designed so as to be sufficient for covering a width of the fingerprint 10a. In reading fingerprint images with the image pickup unit 1a designed in this way, as shown in the figure, the finger 10 is slid in a direction 100A, that is, a direction along an extending direction of the finger 10 on a plane including the image pickup unit 1a and the LED chip 2 while the fingerprint 10a side of the finger 10 is kept in contact with the light-receiving surface 3a of the optical cover 3. In this way, fingerprint images are read sequentially.

In that case, in the fingerprint input device 101, irradiating light 2a, which is an infrared, near-infrared, or red ray emitted from the LED chip 2, enters the inside of the finger 10 from the fingerprint 10a side of the finger 10 advancing to the light-receiving surface 3a, changes to the diffused light 2b, and radiates from the fingerprint 10a portion. This diffused light 2b is guided to the image pickup unit 1a through the optical cover 3, and the image pickup unit 1a receives the diffuse light 2b.

In this way, in this embodiment, the LED chip 2 is arranged such that the irradiating light 2a is emitted into the finger 10, the fingerprint 10a of which is in contact with the light-receiving surface 3a of the image pickup unit 1a. More specifically, as shown in FIG. 1, the LED chip 2 is arranged on a sliding path of the finger 10 in the vicinity of the light-receiving surface 3a of the image pickup unit 1a. An interval between the image pickup unit 1a and the LED chip 2 is desirably set to about several millimeters. By setting the LED chip 2 in the above-mentioned arrangement, as shown in FIG. 2B, the irradiating light 2a is emitted into a thick 10d of the finger 10 even if a fingertip 10b is placed immediately above the image pickup unit 1a. Thus, the diffused light 2b from the fingertip 10b can be received satisfactorily in the image pickup unit 1a. Therefore, according to the fingerprint input device 101, the image pickup unit 1a, which has an area of the light-receiving surface smaller than the area of the fingerprint 10a portion, makes it possible to read an image of the entire fingerprint 10a using at least one LED chip.

### Example of application

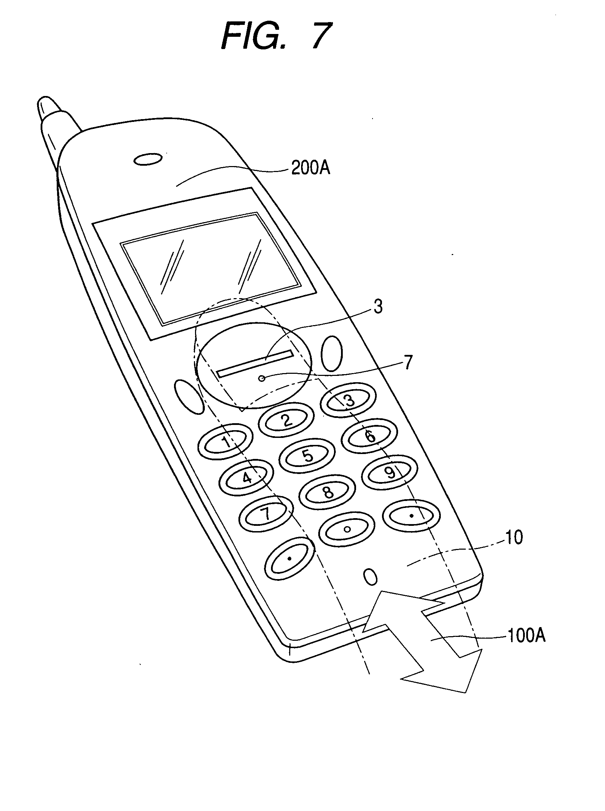

FIG. 7 shows an example in which the fingerprint input device 101 is mounted to a cellular phone. Only the optical cover 3 and the sealing resin 7 of the LED chip 2 are exposed on a surface of a phone housing 200A. A user can input a fingerprint image by moving the finger 10 in the direction 100A while keeping the finger 10 in contact with in this exposed portion. With such a cellular phone, it is possible to identify the user through personal authentication. Thus, the cellular phone can be applied as a terminal for electronic commerce or the like.

### Second embodiment

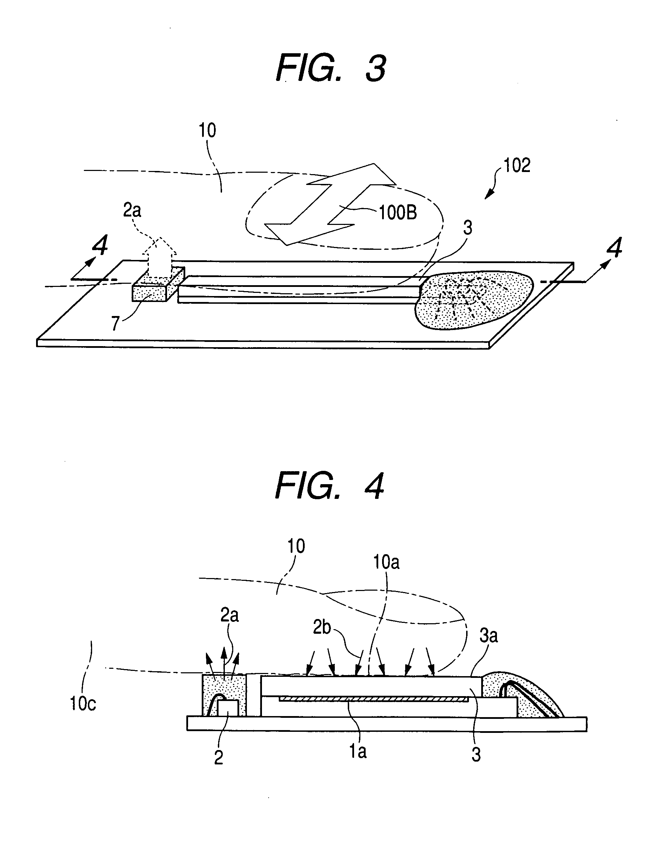

FIG. 3 is a perspective view of a fingerprint input device according to a second embodiment of the present invention. FIG. 4 is a sectional view along a line 4-4 of FIG. 3. A fingerprint input device 102 according to the second embodiment includes the light-receiving surface 3a that covers a length of the fingerprint 10a in the extending direction of the finger 10 and has an area smaller than the fingerprint 10a. By sliding the finger 10 in a direction 100B, that is, in a direction perpendicular to a longitudinal direction of the image pickup unit 1a, a fingerprint image can be read in the same manner as in the first embodiment.

In addition, in the fingerprint input device 102, the LED chip 2 is provided in the vicinity of the light-receiving surface 3a corresponding to a position between the fingerprint 10a of the sliding finger 10 and a base 10c of the finger 10. With such an arrangement of the LED, irradiated light 2a is always irradiated on the position between the fingerprint 10a and the base 10c of the finger 10 from which a fingerprint image should be read. Therefore, according to the fingerprint input device 102, the diffused light 2b from the inside of the finger 10 can be received satisfactorily by the image pickup unit 1a. A fingerprint image of the entire fingerprint 10a portion can be read using at least one LED.

### Example of application

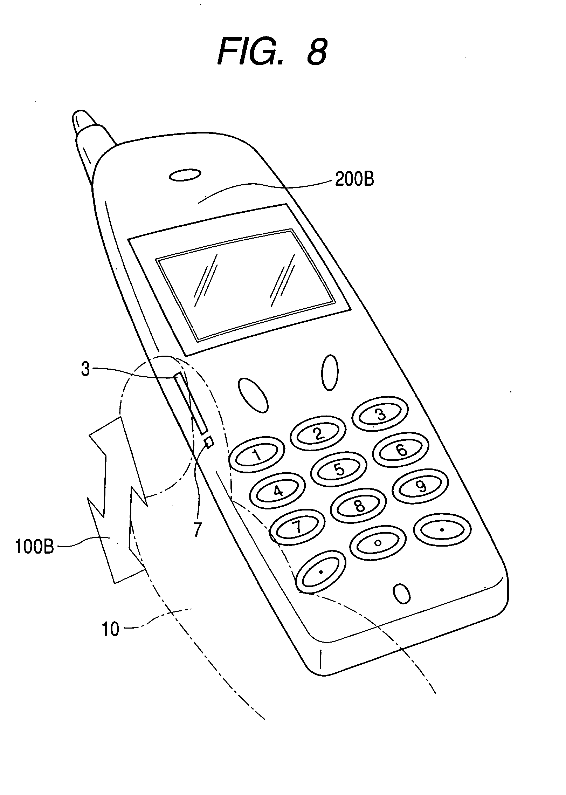

FIG. 8 shows an example of a cellular phone to which the fingerprint input device 102 is mounted. As in the example shown in the figure, the optical cover 3 for the image pickup unit 1a and the sealing resin 7 of the LED chip 2 in the fingerprint input device 102 are exposed on a side surface of a cellular phone 200B, whereby further miniaturization of the cellular phone can be realized.

### Third embodiment

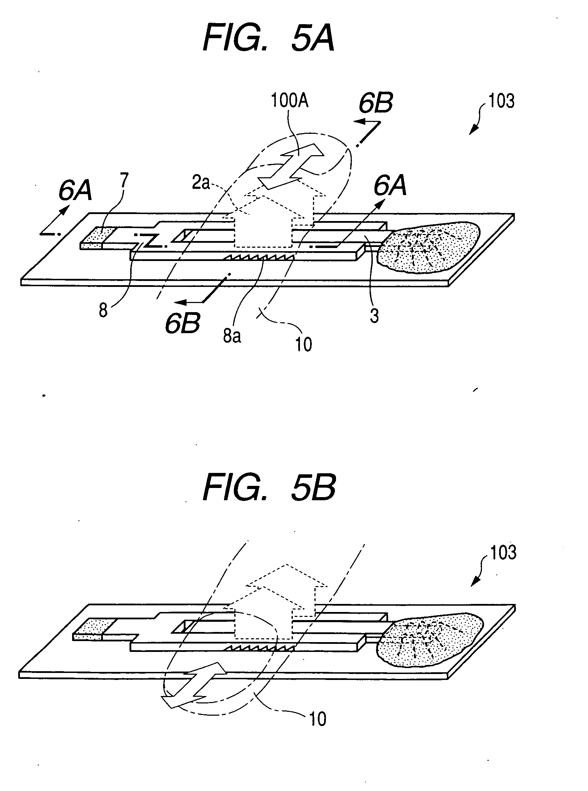

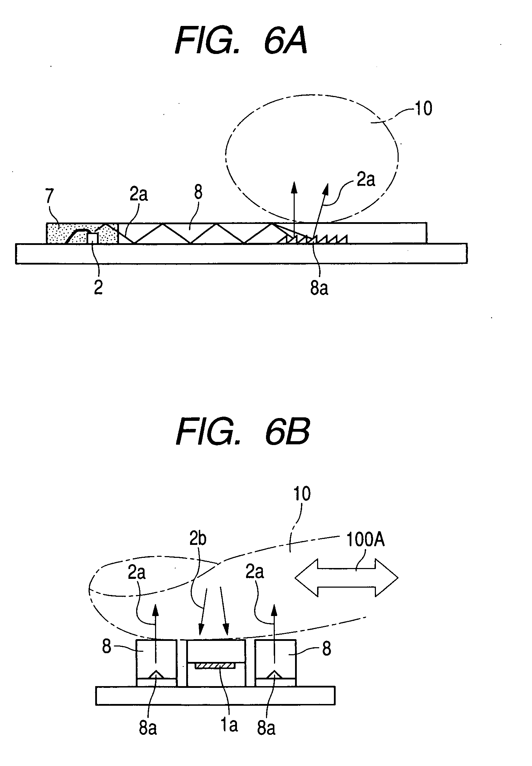

FIGS. 5A and 5B are perspective views of a fingerprint input device according to a third embodiment of the present invention. FIGS. 6A and 6B are sectional views along lines 6A-6A and 6B-6B of FIGS. 5A and 5B, respectively. A fingerprint input device 103 according to the third embodiment includes a light guide member 8, which guides irradiated light from the LED chip 2, in the vicinity of the light-receiving surface 3a of the image pickup unit 1a. This light guide member 8 can be formed of resin, which transmits the irradiated light 2a, such as acrylic, polycarbonate, or epoxy. In addition, light reflection gratings serving as emission units 8a, which emit the irradiated light 2a from the LED chip 2, are formed in portions of the light guide member 8 corresponding to the sliding path of the finger 10.

In this embodiment, the light guide member 8 is formed so as to guide irradiated light from the single LED chip 2 to the vicinities of two long sides of the light-receiving surface 3a. More specifically, as shown in FIGS. 5A and 5B, the light guide member 8 adhered and fixed to the LED chip 2 is bifurcated from the chip 2 along the two long sides so as to partially surround an outer periphery of the light-receiving surface 3a. The emission units 8a are formed in portions on both sides of the light-receiving surface 3 and corresponding to the sliding path of the finger 10. In the fingerprint input device 103 formed in this way, as shown in FIG. 6A, the irradiated light 2 irradiated from the LED chip 2a propagates through the inside of the light guide member 8 while being deflected and reflected. Then, as shown in FIG. 6B, the irradiated light 2a is irradiated to the finger 10 from the emission units 8a provided in the positions where the finger 10 is in contact with the device.

Thus, according to the fingerprint input device 103, a satisfactory fingerprint image can be read by one LED chip 2 whether the finger 10 advances in a direction of FIG. 5A or FIG. 5B.

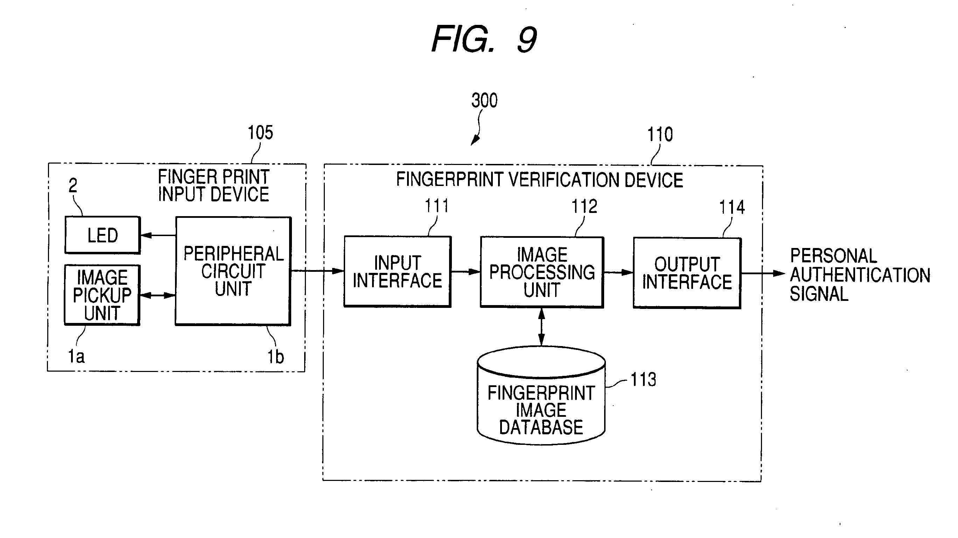

Next, an example of a personal authentication system, to which the fingerprint input devices according to the above-mentioned embodiments are applied, will be explained with reference to FIG. 9. A personal authentication system 300 shown in FIG. 9 includes: a fingerprint input device 105 that has the image pickup unit 1a, a peripheral circuit unit 1b, and the LED chip 2; and a fingerprint identification device 110 that is connected to this fingerprint input device 105. The fingerprint identification device 110 includes: an input interface 111 for inputting communication data, which is outputted from a communication control section (not shown) of the peripheral circuit,unit 1b; an image processing unit 112 serving as fingerprint verification means that is connected to this input interface 111; and a fingerprint image database 113 serving as fingerprint registering means and an output interface 114 that are connected to this image processing unit 112. The output interface 114 is connected to an electronic device (including software) that requires personal authentication for security or the like, for example, when the electronic device is used or logged in.

Here, fingerprints of fingers of people, who should undergo personal authentication, that is, subjects are registered in advance in the fingerprint image database 113. There may be one subject or plural subjects in this context. The fingerprint images of the subjects are inputted to the fingerprint identification device 110 from the fingerprint input device 105 via the input interface 111 in advance as personal authentication information of the subjects at the time of initial setting, addition of subjects, and the like.

A fingerprint image read by the fingerprint input device 105 is inputted to the image processing unit 112 via the input interface 111. The image processing unit 112 verifies the fingerprint image against a registered fingerprint image in the fingerprint image database 113 to find if the fingerprint images match each other on the basis of a known image processing algorithm for fingerprint verification. As a result of the verification, the image processing unit 112 outputs whether the fingerprints matched or mismatched as the personal authentication signal via the output interface 114.

Note that, in the example shown in the figure, the fingerprint input device 105 and the fingerprint verification device 110 are constituted as separate devices. However, the present invention is not limited to this constitution. A function of at least a part of the fingerprint varification device 110 may be incorporated in the peripheral circuit unit 1b of the fingerprint input device 105 as required. In addition, the personal authentication system 300 of this example may be incorporated in an electronic device that requires personal authentication, or may be constituted separately from the electronic device.

The present invention provides a fingerprint input device that is small in size and consumes less power. The fingerprint input device (101) includes: a light source unit (2) that emits light (2a) into an inside of a sliding finger (10); and an image pickup unit (1a) that includes a light-receiving area (3a) smaller than an area of a fingerprint image to be read and receives light (2b) scattered from the inside of the finger to a fingerprint surface (10a) in the light-receiving area. The light source unit is arranged on a sliding path of the finger in the vicinity of the image pickup unit so as to irradiate with light the finger, the fingerprint surface of which is in contact with the light-receiving area of the image pickup unit.

## Claims

1. A fingerprint input device, comprising:
a light source unit that emits light into an inside of a finger; and
an image pickup unit that includes a light-receiving area smaller than an area of a fingerprint image to be read and receives light scattered from the inside of the finger to a fingerprint surface on the light-receiving area,
wherein the light source unit is arranged between the fingerprint surface of the finger and a base of the finger in the vicinity of the image pickup unit so as to irradiate with light the finger, the fingerprint surface of which is in contact with the light-receiving area of the image pickup unit, and, as relatively moving positions of the finger and the image pickup unit, a fingerprint image is read.

2. A fingerprint input device according to claim 1, wherein the light source unit is arranged on a sliding path of the finger in the vicinity of the image pickup unit.

3. A fingerprint input device according to claim 2, wherein the light source unit is arranged in the vicinities of both ends of the image pickup unit on the sliding path.

4. A fingerprint input device according to claim 1, wherein the light source unit comprises an LED chip.

5. A fingerprint input device according to claim 1, wherein the light source unit comprises a light emission unit of a light guide member that is adhered and fixed to the LED chip.

6. A fingerprint input device according to claim 3, wherein the light source unit comprises a light guide member that is adhered and fixed to an LED chip and has two or more light emission units.

7. A fingerprint input device according to claim 1, wherein the image pickup unit comprises one of a one-dimensional image pickup element and a two-dimensional image pickup element that are formed on a silicon chip.

8. A fingerprint input device according to claim 1, wherein the light source unit irradiates any one of an infrared ray, a near-infrared ray, and a red ray.

9. A cellular phone terminal, comprising the fingerprint input device according to claim 1,
wherein a light-receiving area of the image pickup unit of the fingerprint input device and the light source unit are exposed on an operation surface of a housing.

10. A cellular phone terminal, comprising the fingerprint input device according to claim 1,
wherein a light-receiving area of the image pickup unit of the fingerprint input device and the light source unit are exposed on a side surface of a housing.

11. A personal authentication system, comprising the fingerprint input device according to claim 1,
wherein the personal authentication system performs personal authentication using a fingerprint image inputted from the fingerprint input device.

12. A personal authentication system according to claim 11, further comprising:
fingerprint registering means that registers a fingerprint image from the fingerprint input device as a personal authentication information of a subject in advance; and
fingerprint identifying means that verifies the fingerprint image of the personal authentication information registered in advance by the fingerprint registering means and a fingerprint image from the fingerprint input device to find if the fingerprint images match each other and outputs a result of verification as a personal authentication signal.

13. An electronic device, comprising the personal authentication system according to claim 11 or 12.
